# FASCICULE DE BREVET EUROPEEN

(11) **EP 3 160 733 B1**
(45) Date de publication et mention de la délivrance du brevet: **02.09.2020**
(21) Numéro de dépôt: 15753383.7
(22) Date de dépôt: 19.06.2015
(51) Int. Cl.: B32B 7/12, B32B 27/08, B32B 27/30, B32B 27/32, B32B 27/34

(54) **MATERIAU BARRIERE A L'OXYGENE EN PARTICULIER POUR COUVERTURE D'ENSILAGE**
MATERIAL MIT SAUERSTOFFBARRIEREEIGENSCHAFTEN FÜR SILAGEABDECKUNG
OXYGEN BARRIER MATERIAL, IN PARTICULAR FOR SILAGE COVER.

(30) Priorité: 25.06.2014 FR 1455909
(43) Date de publication de la demande: 03.05.2017
(73) Titulaire: SOCIETE D'EXTRUSION DU POLYETHYLENE A. BARBIER ET CIE, 43600 Sainte-Sigolene (FR)
(72) Inventeur: BARALON, Loïc, F-43600 Saint Sigolene (FR); PICHON, Gérard, F-43120 Monistrol sur Loire (FR)
(74) Mandataire: Cabinet Laurent & Charras
(86) Numéro de dépôt international: PCT/FR2015/051636
(87) Numéro de publication internationale: WO 2015/197957

(56) Documents cités:
- WO-A1-94/07930
- WO-A1-2013/061264
- US-A1- 2011 003 099
- US-A1- 2013 052 471
- US-B1- 6 313 241

## Description

### DOMAINE DE L'INVENTION

L'invention a pour objet un film multicouche en matière plastique comprenant au moins une couche barrière à l'oxygène.

Le domaine d'utilisation de la présente invention concerne la couverture et la protection des produits agricoles, tels que les produits agricoles destinés à la production d'ensilage. Le film multicouche est utilisé notamment en tant que couverture d'ensilage ou d'enrubannage, et s'applique tant aux fourrages hachés d'herbes ou graminées qu'au maïs et aux sous-produits agro-alimentaires comme les drêches. Le matériau concernant cette l'invention peut également être utilisé pour la protection des céréales. Pour cette dernière application, le matériau se présente sous la forme d'une gaine et non d'un film de manière à former un boudin à l'intérieur duquel sont introduites les céréales.

La technique la plus commune pour ensiler le fourrage haché, est de le tasser à plat sur une surface bétonnée entre deux murs, puis de le compacter à l'aide de tracteurs afin d'en expulser le maximum d'air interstitiel. Le tout est ensuite protégé par une couverture. Le film de couverture d'ensilage est le plus souvent un film multicouche formulé à base de polyoléfines. Parfois sa structure peut intégrer une couche centrale étanche à l'air. Cette couche étanche a pour effet de limiter au maximum la pénétration d'oxygène dans le silo pour éviter les phénomènes de fermentations aérobies nuisibles pour la qualité nutritive du produit ensilé. La couche centrale favorise également la fermentation lactique qui se produit en condition anéorobie et qui est absolument nécessaire pour garantir la qualité nutritive du produit ensilé.

### ART ANTERIEUR DE LA TECHNIQUE

L'usage de films pour le stockage, la protection et la conservation des produits agricoles d'ensilage est déjà connu. Des films multicouches formés à partir d'un assemblage de différents matériaux sont décrits. Ces films contiennent généralement des couches pour assurer la résistance mécanique telles que des couches de polyéthylène, et d'autres couches qui assurent l'étanchéité à l'air telle que des couches en polyamides.

Le document EP2498990 propose par exemple des couvertures d'ensilage associant deux films détachables l'un de l'autre, de manière à faciliter le recyclage des matériaux. La couverture présente ainsi un film inférieur multicouche qui forme une barrière aux gaz et comprend au moins un des matériaux : polyamide, polyester, copolymère éthylène-vinyle alcool (EVOH), et un film supérieur qui apporte la protection mécanique et comprend entre autres du polyéthylène, polypropylène et leurs dérivés copolymères.

Le document JP 2003276123 propose un film composé de trois couches, utilisé pour former des ballots d'herbes. Les couches externes sont des couches polyoléfines et la couche centrale est une couche de polyamide aliphatique.

De manière connue, le polyamide et le copolymère éthylène-vinyle alcool (EVOH) sont utilisés comme couche barrière à l'oxygène dans les films multicouches. L'EVOH présente l'avantage sur le polyamide de présenter une meilleure étanchéité et une meilleure recyclabilité.

Le document DE 102004008085 décrit un film barrière multicouche d'environ 170µm. Le film est mécaniquement stable et comprend une couche centrale barrière à l'oxygène formée de copolymère éthylène-vinyle alcool (EVOH), de préférence prise en sandwich entre deux couches de polyéthylène et ainsi protégée contre les contraintes mécaniques.

Le document EP 1035762 propose un film mono- ou multicouche, couverture de silo, contenant au moins une couche barrière à l'air, comprenant de préférence du polyamide (PA) ou d'autres matériaux comme le copolymère éthylène-vinyle alcool (EVOH) et l'alcool polyvinilyque (PVOH), ainsi que leur mélange. Ce document décrit aussi un film multicouche de composition PE/PA/PE ou PE/EVOH/PE, les couches PE contenant des agents liants et des colorants. En principe, ce film est surmonté d'un film supérieur appliqué par l'agriculteur, qui confère les caractéristiques mécaniques à l'ensemble.

Le document WO 2013061264 décrit un film multicouche pour couverture d'ensilage, dont la couche barrière à l'oxygène est à base de polyamide ou EVOH. La couverture présente en outre, de part et d'autre de la couche barrière, des couches polyoléfines comprenant entre autres du mLLDPE. Ces couches polyoléfines sont liées à la couche centrale barrière par le biais d'une couche adhésive à base de PE linéaire. Les valeurs de résistance à l'impact au choc (dart test) proposées sont néanmoins seulement 95 g.

En général, les films décrits dans ces documents sont fabriqués par un procédé d'extrusion soufflage qui conduit à l'obtention de films d'une largeur n'excédant pas 8 m. Cette limite s'impose en raison de la composition du film, qui ne permet pas d'obtenir une stabilité satisfaisante de la bulle lors de la fabrication. En outre, la présence d'une couche barrière à l'oxygène, du type par exemple EVOH fragilise la résistance mécanique du film pour de grandes longueurs. Il s'ensuit que pour obtenir des films de largeur supérieures pouvant aller jusqu'à 20 m conformes à une utilisation pour l'ensilage, c'est-à-dire conformes aux exigences de la norme EN 13207 relative aux films thermoplastiques d'ensilage, il est nécessaire de souder plusieurs laizes entre elles.

Le film ainsi obtenu a pour inconvénient de présenter une barrière à l'oxygène discontinue, en particulier au niveau des soudures. De ce fait, le film présente des zones où la barrière à l'oxygène est rompue.

En d'autres termes, le problème que se propose de résoudre l'invention est donc celui de mettre au point un film possédant une couche continue barrière à l'oxygène pour l'ensilage, qui présente une largeur supérieure à au moins 5, avantageusement au moins 6 m, de préférence supérieure à 8 m tout en possédant des caractéristiques mécaniques remplissant les exigences de la norme EN 13207 précitée. Parmi les conditions, figurent notamment la résistance à l'impact au choc qui est mesurée par la méthode dite du « dart test ». La valeur de dart test est déterminée selon une méthodologie décrite dans deux normes identiques que sont la norme ISO 7765-1 et la norme ASTM D1709. Selon la norme EN 13207, cette valeur de dart test doit être supérieure à 300 g.

Le document US2011/0003099A1 décrit la mise en œuvre de LCB-mLLDPE pour la fabrication de films coextrudés avec d'autres couches de polyoléfine. Les films multicouches envisagés ne contiennent pas de couche barrière à l'oxygène. Il apparait que ce choix de polymère permet de diminuer l'effet de nuage (low haze) sur la surface du film.

Le document US6313241B1 décrit la mise en œuvre de copolymères LCB-mLLDPE/vinyl. Les films obtenus sont utilisés dans le domaine de l'emballage pour leur capacité à être extrudés à haute vitesse. Il est en outre précisé que les films obtenus sont clairs et présentent peu d'imperfections sur leur surface.

Le document WO94/07930 décrit des polymères LCB-mLLDPE pour la fabrication de films pour ses propriétés élastiques pendant l'extrusion.

### EXPOSE DE L'INVENTION

Pour résoudre cette problématique, le demandeur a constaté que la présence de polyéthylène LCB-mLLDPE dans au moins une couche du film multicouche conférait à la bulle, lors de son élaboration par coextrusion soufflage, une résistance mécanique et une stabilité suffisante permettant d'obtenir des films de largeur supérieure à 8 m et présentant une valeur de dart test > à 300 g. Ces films présentent de fait, une couche barrière à l'oxygène continue en tout point et sont conformes à la norme EN 13207.

Ainsi, l'invention a pour objet un matériau multicouches, en particulier pour couverture d'ensilage comprenant une couche centrale barrière à l'oxygène prise en sandwich entre au moins deux couches de polyoléfine, chaque couche polyoléfine étant séparée de la couche centrale barrière par une couche adhésive. Le matériau se caractérise en ce qu'au moins une des couches adhésives contient du LCB-mLLDPE.

Selon l'invention, le matériau de l'invention peut se présenter sous la forme d'un film ou d'une gaine. Le film multicouche est plus particulièrement utilisé en tant que couverture d'ensilage ou d'enrubannage. La gaine est plus particulièrement utilisée pour la protection des céréales pour leur stockage après récolte.

Dans la suite de la description, l'invention est plus spécifiquement décrite en liaison avec l'utilisation du matériau sous la forme d'un film.

Par LCB-mLLDPE (de son acronyme anglais Long Chain Branched- metallocene Linear Low Density PolyEthylene), on entend le polyéthylène linéaire basse densité possédant de longues chaines ramifiées, elle-même constituée de monomères ethylène ou mLLDPE. Plus précisément, ce copolymère polyéthylène est obtenu par catalyse homogène dénommée catalyse métallocène. Le LCB-mLLDPE est ainsi obtenu en incorporant dans le squelette principal du mLLDPE, des macromonomères de polyéthylène ou mLLDPE possédant un groupement vinyl terminal, ces macromonomères constituant les ramifications (LCB).

Le copolymère polyéthylène (mLLDPE) peut comprendre des comonomères α-oléfine ramifié ou linéaire de type CH₂=CH-CₙH₂ₙ₊₁ (avec n est compris entre 2 et 6) tel que notamment le 1-hexène, ou encore le méthyl pentène de formule CH₂=CH-CH₂CH(CH₃)-CH₃.

En d'autres termes, par LCB-mLLDPE (de son acronyme anglais Long Chain Branched-metallocene Linear Low Density PolyEthylene), on désigne un homopolymère ou copolymère comprenant une chaine principale (LLPDE) constituée de comonomères α-oléfine ramifiés ou linéaires de type CH₂=CH-CₙH₂ₙ₊₁ (avec n compris entre 0 et 6) et au moins une chaine pendante (LCB) présentant au moins 10, de préférence au moins 50, de préférence, au moins 100, avantageusement au moins 150, idéalement au moins 200, voire au moins 250 atomes de carbone, la chaine pendante comprenant un homopolymère ou copolymère constitué de comonomères α-oléfine ramifiés ou linéaires de type CH₂=CH-CₙH₂ₙ₊₁ (avec n compris entre 0 et 6). Selon une autre caractéristique, les chaines pendantes sont distribuées le long de la chaine principale avec une fréquence moyenne de 0.1 à 5 chaines pendantes pour 1000 atomes de carbone de la chaine principale. Les LCB-mLLDPE sont notamment décrits dans le document WO94/07930 précité, incorporé par référence.

Selon un mode de réalisation préféré, le LCB-mLLDPE est un copolymère mLLDPE/1-hexène possédant des chaines de ramification longues (LCB). Il peut notamment s'agir des copolymères Enable®(par ex Enable 20-05HH) commercialisé par ExxonMobil Chemical, ou Lumicene® Supertough commercialisé par Total Petrochemicals, dont la densité est comprise entre 0.910 et 0.935.

Selon un mode de réalisation avantageux, au moins une des couches adhésives comprend au moins 20%, de préférence au moins 40% en poids de LCB-mLLDPE, avantageusement entre 50 et 80%, encore plus avantageusement entre 60 et 80%. Cela contribue à obtenir la stabilité du film au moment de la formation de la bulle.

Les couches polyoléfines et la couche centrale sont de natures chimiques différentes. De ce fait, il est nécessaire d'intercaler entre elles des couches adhésives permettant ainsi d'assurer leur bonne adhésion. Cela a pour effet d'éviter les éventuels problèmes de délamination intercouches.

D'une manière avantageuse, les couches adhésives indépendamment l'une de l'autre comprennent donc en plus du LCB-mLLDPE, d'autres resines polyoléfiniques dont au moins un liant choisi dans le groupe comprenant: polyéthylène basse densité (LDPE) ; polyéthylène linéaire basse densité, obtenue par catalyse hétérogène (Ziegler-Natta), (LLDPE) ou bien obtenue par catalyse homogène (metallocène) (mLLDPE); LLDPE greffé anhydride maléique ; Polyéthylène moyenne densité (MDPE) ; polyéthylène haute densité (HDPE) ; copolymère éthylène-acétate de vinyle (EVA) ; éthylène-acrylate de butyle (EBA) ; copolymère éthylène-acrylate de méthyle (EMA) ; copolymère éthylène-acrylate d'éthyle (EEA) ; polypropylène (PP) ; copolymère propylène-éthylène ; copolymère éthylène-acide acrylique (EAA), copolymère éthylène-acide méthacrylique (EMAA) ; copolymère éthylène-anhydride maléique ; et copolymère éthylène-ester acrylique-anhydride maléique (EEAMA). Dans un mode de réalisation avantageux, la ou les couches adhésives comprennent du LLDPE greffé Anhydride Maléique.

Selon un mode de réalisation avantageux de l'invention, au moins une des couches adhésives du film multicouche comprend du LCB-mLLDPE/1-hexène et du LLDPE greffé anhydride maléique. En pratique, le liant représente au moins 20%, avantageusement entre 40 et 50%, de préférence entre 30 et 40% en poids de la couche adhésive.

En pratique, chacune des couches adhésives représente entre 5 et 30% de l'épaisseur totale, avantageusement de l'ordre de 20%.

La couche centrale du film selon l'invention est la couche barrière à l'air. Cette couche centrale comprend d'une manière avantageuse au moins un matériau choisi dans le groupe comprenant: copolymère éthylène-alcool vinylique (EVOH) ; (co)polyamide ; alliage (co)polyamide/polyoléfine ; (co)polyester ; et polymère d'alcool vinylique (PVOH).La couche centrale comprend de préférence le copolymère EVOH, et a une épaisseur représentant de 4 à 15%, avantageusement de l'ordre de 9% de l'épaisseur totale du film.

Les propriétés physicochimiques du copolymère EVOH, varient en fonction des teneurs respectives des différents comonomères qui le constitue. Ainsi, plus le pourcentage molaire en monomère éthylène est élevé, plus la résistance mécanique de la couche centrale est élevée.

Selon un mode de réalisation particulier, le copolymère EVOH compris dans la couche barrière centrale présente un pourcentage molaire en monomère éthylénique de préférence compris entre 10 et 60, de manière plus préférentielle entre 38 et 48. Avantageusement le copolymère EVOH comprend un pourcentage molaire en monomère éthylénique égal à 44.

Comme précisé précédemment, l'imperméabilité au gaz et en particulier à l'oxygène de l'air, propriété essentielle pour les films de couverture d'ensilage, est notamment assurée par la couche barrière centrale. Une autre exigence est d'assurer une bonne résistance et durabilité mécanique. Cette exigence est notamment assurée par les couches adhésives et les couches polyoléfines.

D'une manière avantageuse, les couches polyoléfines comprennent indépendamment l'une de l'autre au moins un matériau choisi dans le groupe comprenant : polyéthylène basse densité (LDPE) ; polyéthylène linéaire basse densité, obtenue par catalyse hétérogène (Ziegler-Natta), (LLDPE) ou bien obtenue par catalyse homogène (metallocène) (mLLDPE); polyéthylène moyenne densité (MDPE) ; polyéthylène haute densité (HDPE) ; copolymère éthylène-acétate de vinyle (EVA) ; éthylène-acrylate de butyle (EBA) ; copolymère éthylène-acrylate de méthyle (EMA) ; copolymère éthylène-acrylate d'éthyle (EEA) ; polypropylène (PP) ; copolymère propylène-éthylène ; copolymère éthylène-acide acrylique (EAA), copolymère éthylène-acide méthacrylique (EMAA) ; copolymère éthylène-anhydride maléique ; et copolymère éthylène-ester acrylique-anhydride maléique (EEAMA).

De manière préférentielle, les couches de polyoléfine contiennent en majorité du mLLDPE. Il s'agit avantageusement du copolymère mLLDPE/1-héxène, il peut notamment s'agir des copolymères Exceed®1018CA commercialisé par ExxonMobil Chemical ou Eltex® PF6212KJ Commercialisé par Ineos, dont la densité est comprise entre 0.910 et 0.922

L'épaisseur d'une couche polyoléfine représente avantageusement entre 20% et 45% de l'épaisseur totale.

Selon un mode de réalisation avantageux, le film multicouche couverture d'ensilage objet de la présente invention contient entre 5 et 9 couches. De manière avantageuse le film comprend une couche centrale barrière à l'oxygène, deux couches adhésives et au moins deux couches de polyoléfine.

Selon un autre mode de réalisation avantageux, le film multicouche couverture d'ensilage objet de la présente invention contient cinq couches, dont deux couches polyoléfines identiques, une couche centrale barrière à l'air et au moins une couche adhésive contenant du LCB-mLLDPE.

Le film comprend de préférence cinq couches, dont deux couches polyoléfines identiques, une couche centrale barrière à l'oxygène et deux couches adhésives, éventuellement identiques.

De manière avantageuse, le film multicouche contenant cinq couches selon les modes de réalisation décrits ci-dessus, et présente une épaisseur comprise de préférence entre 25µm et 250µm et d'une manière plus préférentielle entre 100 et 135µm.

Comme déjà dit, les films multicouches de l'invention présentent une valeur de résistance à l'impact au choc (dart test) conforme à la norme internationale EN13207, c'est-à-dire supérieur à 300 g. Comme il sera vu par la suite, la présence de LCB-mLLDPE en lieu et place de LDPE permet à la fois de fabriquer des bulles de grande largeur et d'obtenir une haute résistance mécanique, et ce, malgré la présence d'une couche milieu constituée d'un polymère barrière à l'oxygène.

L'homme du métier saura choisir le ou les additifs adéquats qui peuvent éventuellement être incorporés dans les différentes couches du film de la présente invention. De manière non limitative il peut notamment s'agir d'additifs organiques, notamment : des agents anti-UV, des agents glissants, des polymères fluorés, des charges minérales et des pigments et colorants minéraux et/ou organiques.

Selon la présente invention et d'une manière avantageuse, les films multicouches présentent une largeur supérieure à 5 m, avantageusement supérieure à 8m, de préférence supérieure à 10 m et de manière plus préférentielle supérieure à 14 m.

Selon un mode de réalisation avantageux, le film multicouche de la présente invention, dont l'épaisseur est comprise entre 100 et 135µm, présente :
- une très bonne régularité de l'épaisseur de la couche EVOH sur toute sa largeur qui permet de garantir en tout point de sa surface une perméabilité à l'oxygène selon DIN 53380-3, à 23°C et 50 % d'humidité relative, inférieure à 2.5 cm³ / (m².jour.bar), c'est-à-dire au moins 100 fois plus étanche à l'oxygène qu'un film d'ensilage standard de même épaisseur formulé à base de polyoléfines.
- Des propriétés mécaniques fonctionnelles pour l'application en tant que couverture de silo d'ensilage entre autre : Dart test F50 >300g (selon EN 13207 et mesuré selon EN ISO 7765-1)

En outre le film multicouche selon l'invention est mécaniquement recyclable. Des tests réalisés à l'échelle industrielle ont montré que la matière ainsi recyclée pouvait être utilisée telle qu'elle, ou en mélange avec du polyéthylène, sans générer de problèmes d'extrudabilité ni de perte de propriétés mécaniques du film extrudé.

Il est donc démontré que ce film ne pose pas de problème de recyclabilité s'il est récupéré après usage et mélangé avec des films agricoles usagés, à base de polyoléfines uniquement. Ce film ne présente pas de risque d'altérer la qualité des matières plastiques recyclées, issues de la collecte des films agricoles usagés.

L'invention concerne également un film thermoplastique pour l'ensilage constitué du matériau multicouche précédemment décrit. Le film présente une largeur d'au moins 5 mètres, avantageusement d'au moins 8 mètres.

L'invention et les avantages qui en découlent ressortiront mieux des exemples suivants, donnés afin d'illustrer l'invention et non de manière limitative.

### EXEMPLES DE REALISATION DE L'INVENTION

### EXEMPLE 1

On obtient par procédé d'extrusion soufflage un film qui possède une épaisseur moyenne de 115µm et une largeur de 12m, présentant 5 couches successives dont la composition est détaillée dans le tableau 1 :
- Une première externe couche A composé de PE majoritairement du mLLDPE.
- Une première couche B adhésive composé majoritairement de LCB-mLLDPE et de LLDPE greffé Anhydride Maléique jouant le rôle de liant.
- Une couche centrale C barrière à l'oxygène composé majoritairement d'EVOH.
- Une deuxième couche D adhésive composé majoritairement de LDPE et de LLDPE greffé anhydride maléique jouant le rôle de liant.
- Une deuxième couche externe E composé majoritairement de mLLDPE et de PE.

**Tableau 1**

| Couche | Epaisseur (µm) | % en poids | Nature des matériaux |
|---|---|---|---|
| E (Externe bulle) | 28.75 | 69% | mLLDPE |
| | | 23% | PE |
| | | 5% | MM UVⁱ |
| | | 3% | MM ANTIBLOCⁱⁱ |
| D | 23,575 | 66,20% | LDPE |
| | | 25% | LLDPE greffé anhydride maléique |
| | | 8.80% | MM VERT UV ⁱⁱⁱ |
| C | 10.35 | 99% | EVOH |
| | | 1% | MMPPA ^{iv} |
| B | 23,575 | 66,20% | LCB-mLLDPE |
| | | 25% | LLDPE greffé anhydride maléique |
| | | 8.80% | MM NOIR^{v} |
| A (Interne bulle) | 28.75 | 69.50% | mLLDPE |
| | | 23% | PE |
| | | 7.50% | MM NOIR |

| | | | |
|---|---|---|---|
| MM = Mélange Maitre ⁱ MM UV (10% AntiUV type HALS) ⁱⁱ MM ANTIBLOC (70% Silicate d'aluminium) ⁱⁱⁱ MM VERT (pigment colorant + 7%Anti UV type HALS) ^{iv} MMPPA (2% Fluoroeleastomer) ^{v} MM NOIR (40% Noir de Carbone) | | | |

Le film présente les caractéristiques physicochimiques détaillées dans le tableau 2 :

**Tableau 2**

| | | | |
|---|---|---|---|
| Contrainte Rupture sens long | ISO 527-3 | 27,5 | MPa |
| Contrainte Rupture sens travers | ISO 527-3 | 27,5 | MPa |
| Allongement Rupture (sens long) | ISO 527-3 | 540 % | |
| Allongement Rupture (sens travers) | ISO 527-3 | 520% | |
| Dart Test | ISO 7765-1 | 321 | g |

Le tableau suivant liste les mesures d'épaisseur effectuées au microscope en 13 points séparés d'environ 1 m sur toute la largeur, sur coupe microtomique.

| | | | | | | | | | | | | | |
|---|---|---|---|---|---|---|---|---|---|---|---|---|---|
| EVOH | 10.2 | 10.5 | 10.2 | 10.7 | 10.7 | 10.3 | 11 | 10.5 | 10.2 | 10.6 | 11.2 | 11.8 | 10.2 |

Comme le montre ce tableau, l'épaisseur de la couche barrière est constante sur toute la largeur ce qui confirme qu'elle est continue sans zone de rupture à la barrière oxygène.

### EXEMPLE 2

### Exemple 2.1 : pas de LCB-mLLDPE dans la couche B

On obtient par procédé d'extrusion soufflage un film qui possède une épaisseur moyenne de 120 µm et une largeur de 12m, présentant 5 couches successives dont la composition est détaillée dans le tableau 3 :
- Une première externe couche A composé de PE majoritairement du mLLDPE et d'autre PE.
- Une première couche B adhésive composé majoritairement de LDPE et de LLDPE greffé Anhydride Maléique jouant le rôle de liant.
- Une couche centrale C barrière à l'oxygène composé majoritairement d'EVOH.
- Une deuxième couche D adhésive composé majoritairement de LDPE et de LLDPE greffé anhydride maléique jouant le rôle de liant.
- Une deuxième couche externe E composé majoritairement de mLLDPE et d'autre PE.

**Tableau 3**

| Couche | Ratio %/ épaisseur du film | % en poids | Nature des matériaux |
|---|---|---|---|
| E (Externe bulle) | 25 | 69% | mLLDPE |
| | | 23% | PE |
| | | 5% | MM UVⁱ |
| | | 3% | MM ANTIBLOCⁱⁱ |
| D | 20.5 | 66,20% | LDPE |
| | | 25% | LLDPE greffé anhydride maléique |
| | | 8.80% | MM VERT UV ⁱⁱⁱ |
| c | 9 | 99% | EVOH |
| | | 1% | MMPPA ^{iv} |
| B | 20.5 | 66,20% | LDPE |
| | | 25% | LLDPE greffé anhydride maléique |
| | | 8.80% | MM NOIR^{v} |
| A (Interne bulle) | 25 | 69.50% | mLLDPE |
| | | 23% | PE |
| | | 7.50% | MM NOIR |

| | | | |
|---|---|---|---|
| MM = Mélange Maitre ⁱ MM UV (10% AntiUV type HALS) ⁱⁱ MM ANTIBLOC (70% Silicate d'aluminium) ⁱⁱⁱ MM VERT (pigment colorant + 7%Anti UV type HALS) ^{iv} MMPPA (2% Fluoroeleastomer) ^{v} MM NOIR (40% Noir de Carbone) | | | |

### Exemple 2.2 : présence de LCB-mLLDPE dans la couche B

Dans cet exemple, la composition du film multicouche est identique à celle du film de l'exemple 2.1 à l'exception du fait qu'on remplace les 66,20% de LDPE de la couche B par 66,20% de LCB-mLLDPE

Le film présente les caractéristiques physicochimiques détaillées dans le tableau 4 :

**Tableau 4**

| | Méthode d'essai | Exemple 2.1 | Exemple 2.2 | unité |
|---|---|---|---|---|
| Dart Test | ISO 7765-1 | 251 | 341 | g |

Le tableau suivant liste les mesures d'épaisseur effectuées au microscope en 13 points séparés d'environ 1 m sur toute la largeur du film de l'exemple 2.2, sur coupe microtomique.

| | | | | | | | | | | | | | |
|---|---|---|---|---|---|---|---|---|---|---|---|---|---|
| EVOH | 7.2 | 7.5 | 7.2 | 7.7 | 7.7 | 7.3 | 8 | 7.5 | 7.2 | 7.6 | 8.2 | 8.8 | 7.2 |

Comme le montre ce tableau, l'épaisseur de la couche barrière est constante sur toute la largeur ce qui confirme qu'elle est continue sans zone de rupture à la barrière oxygène.

### EXEMPLE 3

### Exemple 3.1 : pas de LCB-mLLDPE dans la couche B

On obtient par procédé d'extrusion soufflage un film qui possède une épaisseur moyenne de 120 µm et une largeur de 12m, présentant 5 couches successives dont la composition est détaillée dans le tableau 5 :

**Tableau 5**

| Couche | Ratio %/ épaisseur du film | % en poids | Nature des matériaux |
|---|---|---|---|
| E (Externe bulle) | 25 | 69% | mLLDPE |
| | | 23% | PE |
| | | 5% | MM UVⁱ |
| | | 3% | MM ANTIBLOCⁱⁱ |
| D | 20.5 | 66,20% | LDPE |
| | | 25% | LLDPE greffé anhydride maléique |
| | | 8.80% | MM VERT UV ⁱⁱⁱ |
| c | 9 | 99% | EVOH |
| | | 1% | MMPPA ^{iv} |
| B | 20.5 | 70% | LLDPE |
| | | 25% | LLDPE greffé anhydride maléique |
| | | 5% | MMUV |
| (Interne bulle) | 25 | 69.50% | mLLDPE |
| | | 23% | PE |
| | | 7.50% | MM NOIR |

### Exemple 3.2 : présence de LCB-mLLDPE dans la couche B

Dans cet exemple, la composition du film multicouche est identique à celle du film de l'exemple 3.1 à l'exception du fait qu'on remplace les 70% de LLDPE de la couche B par 70% de LCB-mLLDPE

Le film présente les caractéristiques physicochimiques détaillées dans le tableau 4 :

**Tableau 6**

| | Méthode d'essai | Exemple 2.1 | Exemple 2.2 | unité |
|---|---|---|---|---|
| Dart Test | ISO 7765-1 | 245 | 478 | g |

Le tableau suivant liste les mesures d'épaisseur effectuées au microscope en 12 points séparés d'environ 1 m sur toute la largeur du film de l'exemple 3.2, sur coupe microtomique.

| | | | | | | | | | | | | |
|---|---|---|---|---|---|---|---|---|---|---|---|---|
| EVOH | 7.2 | 8.5 | 8.3 | 7.7 | 9.7 | 11 | 10 | 12 | 10 | 9.4 | 9.4 | 9.1 |

Comme le montre ce tableau, l'épaisseur de la couche barrière est constante sur toute la largeur ce qui confirme qu'elle est continue sans zone de rupture à la barrière oxygène.

## Revendications

1. Matériau multicouches, notamment pour couverture d'ensilage comprenant une couche centrale barrière à l'oxygène prise en sandwich entre au moins deux couches de polyoléfine, chaque couche polyoléfine étant séparée de la couche centrale barrière par une couche adhésive, ***caractérisé en ce qu**'au* moins une des couches adhésives contient du LCB-mLLDPE.

2. Matériau multicouches selon la revendication 1, ***caractérisé en ce que*** le LCB-mLLDPE est un copolymère mLLDPE/1-hexène possédant des chaines de ramification longues (LCB).

3. Matériau multicouches selon une des revendications 1 à 2 ***caractérisé en ce qu'au*** moins une des couches adhésives comprend au moins 20% en poids de LCB-mLLDPE, avantageusement entre 60 et 80%.

4. Matériau multicouches selon une des revendications 1 à 3 ***caractérisé en ce que*** les couches adhésives comprennent en outre et indépendamment l'une de l'autre au moins un matériau choisi dans le groupe comprenant: LDPE ; MDPE ; HDPE ; LLDPE greffé anhydride maléique ; LLDPE ; mLLDPE ; copolymère éthylène-acétate de vinyle (EVA) ; éthylène-acrylate de butyle (EBA) ; copolymère éthylène-acrylate de méthyle (EMA) ; copolymère éthylène-acrylate d'éthyle (EEA) ; polypropylène (PP) ; copolymère propylène éthylène ; copolymère éthylène acide acrylique (EAA) ; éthylène acide méthacrylique (EMAA) ; copolymère éthylène-anhydride maléique ; et copolymère éthylène-ester acrylique-anhydride maléique (EEAMA).

5. Matériau multicouches selon une des revendications 1 à 4 ***caractérisé en ce qu**'au* moins une des couches adhésives comprend du LCB-mLLDPE et du LLDPE greffé anhydride maléique.

6. Matériau multicouches selon une des revendications 1 à 5 ***caractérisé en ce que*** la couche centrale comprend au moins un matériau choisi dans le groupe comprenant: le copolymère éthylène-alcool vinylique (EVOH) ; (co)polyamide ; alliage (co)polyamide/polyoléfine ; (co)polyester ; et PVOH ; avantageusement le copolymère EVOH.

7. Matériau multicouches selon les revendications 1 à 6, ***caractérisé en ce que*** les couches polyoléfine comprennent indépendamment l'une de l'autre au moins un matériau choisi dans le groupe comprenant: LDPE ; mLLDPE ; LDPE ; LLDPE ; MDPE ; HDPE ; copolymère éthylène-acétate de vinyle (EVA) ; éthylène-acrylate de butyle (EBA) ; copolymère éthylène-acrylate de méthyle (EMA) ; copolymère éthylène-acrylate d'éthyle (EEA) ; polypropylène (PP) ; copolymère propylène éthylène ; copolymère éthylène acide acrylique (EAA), éthylène acide méthacrylique (EMAA) ; copolymère éthylène-anhydride maléique ; copolymère éthylène-ester acrylique-anhydride maléique (EEAMA)

8. Matériau multicouches selon les revendications 1 à 7, ***caractérisé en ce que*** les couches polyoléfine comprennent du mLLDPE.

9. Matériau multicouches selon l'une des revendications 1 à 8 ***caractérisé en ce qu**'il* contient entre 5 couches, dont deux couches polyoléfine identiques et au moins une couche adhésive contenant du LCB-mLLDPE.

10. Matériau multicouches selon l'une des revendications 1 à 9 ***caractérisé en ce qu**'il* contient entre 5 couches, dont deux couches polyoléfine identiques et deux couches adhésives identiques.

11. Matériau multicouches selon l'une des revendications 1 à 10 ***caractérisé en ce qu**'il* contient entre 5 couches et présente une épaisseur comprise entre 25 et 250µm de préférence entre 100 et 135µm.

12. Matériau multicouches selon l'une des revendications 1 à 11 ***caractérisé en ce qu**'il* présente sous la forme d'un film ayant une largeur d'au moins 5m, avantageusement d'au moins 8 mètres.

13. Matériau multicouches selon l'une des revendications 1 à 11 ***caractérisé en ce qu**'il* présente sous la forme d'une gaine.

14. Film thermoplastique pour l'ensilage constitué du matériau objet de l'une des revendications 1 à 13.

## Patentansprüche

1. Mehrschichtiges Material, insbesondere als Siloabdeckung mit einer zentralen Sauerstoffsperrschicht, zwischen mindestens zwei Polyolefinschichten, jede Polyolefinschicht ist von der zentralen Sperrschicht durch eine Haftschicht getrennt, ***dadurch gekennzeichnet, dass*** mindestens eine der Haftschichten LCB-mLLDPE enthält.

2. Mehrschichtiges Material nach Anspruch 1, ***dadurch gekennzeichnet, dass*** es sich bei dem LCB-mLLDPE um ein LLDPE/1-Hexen - Copolymer handelt, das lange Verzweigungsketten (LCB) besitzt.

3. Mehrschichtiges Material nach einem der Ansprüche 1 bis 2, ***dadurch gekennzeichnet, dass*** mindestens eine der Haftschichten mindestens 20 Gewichts-% LCB-mLLDPE enthält, vorteilhafterweise zwischen 60 und 80%.

4. Mehrschichtiges Material nach einem der Ansprüche 1 bis 3, ***dadurch gekennzeichnet, dass*** die Haftschichten außerdem und unabhängig voneinander, mindestens ein Material enthalten, das ausgewählt wird aus der Gruppe mit: LDPE; MDPE; HDPE; mit Maleinsäureanhydrid pfropftes LLDPE; LLDPE; mLLDPE; Ethylen- Vinylacetat- Copolymer (EVA); Ethylen- Butylacrylat (EBA); Ethylen-Methylacrylat- Copolymer (EMA); Ethylen- Ethylacrylat- Copolymer (EEA); Polypropylen (PP); Propylen- Ethylen- Copolymer; Ethylen- AcrylsäureCopolymer (EAA); Ethylen- Methacrylsäue (EMAA); Ethylen-Maleinsäureanhydrid- Copolymer; und Ethylen- Acrylester- Maleinsäureanhydrid - Copolymer (EEAMA).

5. Mehrschichtiges Material nach einem der Ansprüche 1 bis 4 ***dadurch gekennzeichnet, dass*** mindestens eine der Haftschichten LCB-mLLDPE und mit Maleinsäureanhydrid pfropftes LLDPE enthält.

6. Mehrschichtiges Material nach einem der Ansprüche 1 bis 5 ***dadurch gekennzeichnet, dass*** die zentrale Schicht mindestens ein Material enthält, das ausgewählt wird aus der Gruppe mit Ethylen- Vinylalkohol- Copolymer (EVOH) (Co)polyamid; Legierung (Co)polyamid/ Polyolefin; (Co)polyester ; sowie PVOH; vorteilhafterweise das Copolymer EVOH.

7. Mehrschichtiges Material nach den Ansprüchen 1 bis 6, ***dadurch gekennzeichnet, dass*** die Polyolefinschichten unabhängig voneinander mindestens ein Material enthalten, das ausgewählt wird aus der Gruppe mit: LDPE; mLLDPE; LDPE; LLDPE; MDPE; HDPE; Ethylen- Vinylacetat- Copolymer (EVA); Ethylen-Butylacrylat (EBA); Ethylen- Methylacrylat- Copolymer (EMA); Ethylen-Ethylacrylat- Copolymer (EEA); Polypropylen (PP); Propylen- EthylenCopolymer; Ethylen- Acrylsäure- Copolymer (EAA), Ethylen- Methacrylsäure (EMAA) ; Ethylen- Maleinsäureanhydrid- Copolymer, Ethylen- Acrylester-Maleinsäureanhydrid - Copolymer (EEAMA).

8. Mehrschichtiges Material nach den Ansprüchen 1 bis 7, ***dadurch gekennzeichnet, dass*** die Polyolefinschichten mLLDPE enthalten.

9. Mehrschichtiges Material nach einem der Ansprüche 1 bis 8 ***dadurch gekennzeichnet, dass*** es zwischen 5 Schichten enthält, darunter zwei identische Polyolefinschichten und mindestens eine Haftschicht, die LCB-mLLDPE enthält.

10. Mehrschichtiges Material nach einem der Ansprüche 1 bis 9 ***dadurch gekennzeichnet, dass*** es zwischen 5 Schichten enthält, darunter zwei identische Polyolefinschichten und zwei identische Haftschichten.

11. Mehrschichtiges Material nach einem der Ansprüche 1 bis 10 ***dadurch gekennzeichnet, dass*** es zwischen 5 Schichten enthält und eine Dicke zwischen 25 und 250 µm hat, vorzugsweise zwischen 100 und 135 µm.

12. Mehrschichtiges Material nach einem der Ansprüche 1 bis 11 ***dadurch gekennzeichnet, dass*** es die Form einer Folie hat, mit einer Breite von mindestens 5m, vorteilhafterweise mindestens 8 Meter.

13. Mehrschichtiges Material nach einem der Ansprüche 1 bis 11, ***dadurch gekennzeichnet*, *dass*** es die Form einer Hülle hat.

14. Thermoplastische Folie für Silage bestehend aus dem Material, das Gegenstand eines der Ansprüche 1 bis 13 ist.

## Claims

1. A multilayer material, notably for silage cover, that comprises a central oxygen-barrier layer sandwiched between at least two polyolefin layers, each polyolefin layer being separated from the central barrier layer by an adhesive layer, ***characterized in that*** at least one of the adhesive layers contains LCB-mLLDPE.

2. The multilayer material according to claim 1, ***characterized in that*** LCB-mLLDPE is an mLLDPE/1-hexene copolymer with long-chain branches (LCB).

3. The multilayer material according to either of claims 1 or 2, ***characterized in that*** at least one of the adhesive layers comprises at least 20% by weight LCB-mLLDPE, advantageously between 60 and 80%.

4. The multilayer material according to any of claims 1 to 3, ***characterized in that*** the adhesive layers also comprise, independently of each other, at least one material chosen from among the group comprising: LDPE; MDPE; HDPE; maleic anhydride-grafted LLDPE; LLDPE; mLLDPE; ethylene-vinyl acetate copolymer (EVA); ethylene-butyl acrylate (EBA); ethylene-methyl acrylate copolymer (EMA); ethylene-ethyl acrylate copolymer (EEA); polypropylene (PP); propylene-ethylene copolymer; ethylene-acrylic acid copolymer (EAA); ethylene-methacrylic acid (EMAA); ethylene-maleic anhydride copolymer; and ethylene-acrylic ester-maleic anhydride copolymer (EAEMA).

5. The multilayer material according to any of claims 1 to 4, ***characterized in that*** at least one of the adhesive layers comprises LCB-mLLDPE and maleic anhydride-grafted LLDPE.

6. The multilayer material according to any of claims 1 to 5, ***characterized in that*** the central layer comprises at least one material chosen from the group comprising: ethylene-vinyl alcohol copolymer (EVOH); (co)polyamide; (co)polyamide/polyolefin alloy; (co)polyester; and PVOH; advantageously the EVOH copolymer.

7. The multilayer material according to any of claims 1 to 6, ***characterized in that*** the polyolefin layers comprise, independently of each other, at least one material chosen from among the group comprising: LDPE; mLLDPE; LDPE; LLDPE; MDPE; HDPE; ethylene-vinyl acetate copolymer (EVA); ethylene-butyl acrylate (EBA); ethylene-methyl acrylate copolymer (EMA); ethylene-ethyl acrylate copolymer (EEA); polypropylene (PP); propylene-ethylene copolymer; ethylene-acrylic acid copolymer (EAA); ethylene-methacrylic acid (EMAA); ethylene-maleic anhydride copolymer; ethylene-acrylic ester-maleic anhydride copolymer (EEAMA).

8. The multilayer material according to any of claims 1 to 7, ***characterized in that*** the polyolefin layers comprise mLLDPE.

9. The multilayer material according to any of claims 1 to 8, ***characterized in that*** it contains 5 layers, including two identical polyolefin layers and at least one adhesive layer containing LCB-mLLDPE.

10. The multilayer material according to any of claims 1 to 9, ***characterized in that*** it contains 5 layers, including two identical polyolefin layers and two identical adhesive layers.

11. The multilayer material according to any of claims 1 to 10, ***characterized in that*** it contains 5 layers and has a thickness of between 25 and 250 µm, preferably between 100 and 135 µm.

12. The multilayer material according to any of claims 1 to 11, ***characterized in that*** it is in the form of a film having a width of at least 5 m, advantageously of at least 8 meters.

13. The multilayer material according to any of claims 1 to 11, ***characterized in that*** it is in sheath form.

14. Thermoplastic film for silage consisting of the material that is the object of any of claims 1 to 13.
